# EUROPÄISCHE PATENTANMELDUNG

(11) **EP 1 555 300 A1**
(43) Veröffentlichungstag der Anmeldung: **20.07.2005**
(21) Anmeldenummer: 05000386.2
(22) Anmeldetag: 11.01.2005
(51) Int. Cl.: C09B 62/245, C09B 62/008, C09B 62/44, C09B 62/51

(54) **Reaktive Azofarbstoffe, Verfahren zu ihrer Herstellung und ihre Verwendung**

(30) Priorität: 17.01.2004 DE 102004002577
(71) Anmelder: DyStar Textilfarben GmbH & Co. Deutschland KG, 65926 Frankfurt am Main (DE)
(72) Erfinder: Ehrenberg, Stefan, Dr., 65795 Hattersheim (DE); Wörner, Jörg, 63486 Bruchköbel (DE); Livesey, Tracy, 69214 Eppelheim (DE)

(57) **Zusammenfassung**

Die vorliegende Erfindung betrifft Reaktivfarbstoffe der allgemeinen Formel (1) 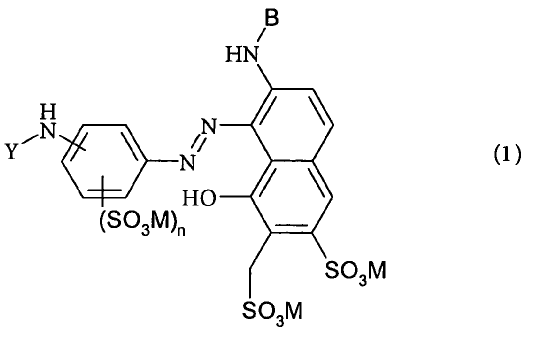 worin
- Y: für eine heterocyclische Reaktivgruppe der allgemeinen Formel (2) oder (3) 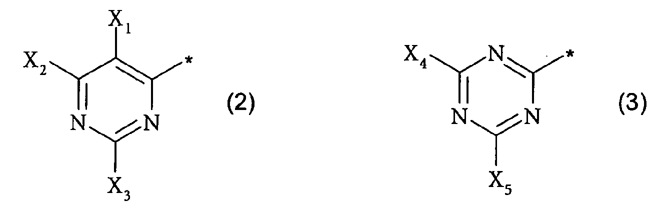
steht, wobei X₁ bis X₅ wie in Anspruch 1 angegeben definiert sind,

Verfahren zu ihrer Herstellung, sowie ihre Verwendung zum Färben und Bedrucken hydroxy- und/oder carbonamidgruppenhaltigen Materialien.

## Beschreibung

Die vorliegende Erfindung liegt auf dem Gebiet der faserreaktiven Farbstoffe. Aus den Dokumenten DE 19810906 und DE 19600765 sind bereits Farbstoffe bekannt, die mit den nachfolgend beschriebenen erfindungsgemäßen Farbstoffen strukturelle Ähnlichkeiten aufweisen, sich aber bezüglich der Reaktivanker oder in der Art der Kupplungskomponente unterscheiden. Diese bekannten Farbstoffe weisen eine Reihe von technischen Nachteilen beim Färben von Textilmaterialien auf, die es zu verbessern galt.

Überraschenderweise wurde nun gefunden, dass sich die nachfolgenden Farbstoffe der allgemeinen Formel (1) vorteilhaft von den bekannten Farbstoffen abheben.

Die vorliegende Erfindung betrifft Reaktivfarbstoffe der allgemeinen Formel (1) 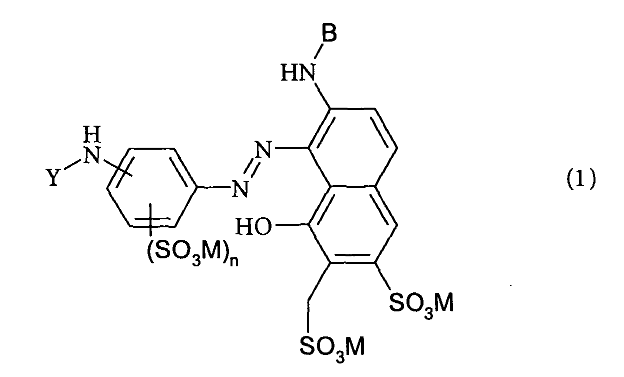 worin
- Y: für eine heterocyclische Reaktivgruppe der allgemeinen Formel (2) oder (3) 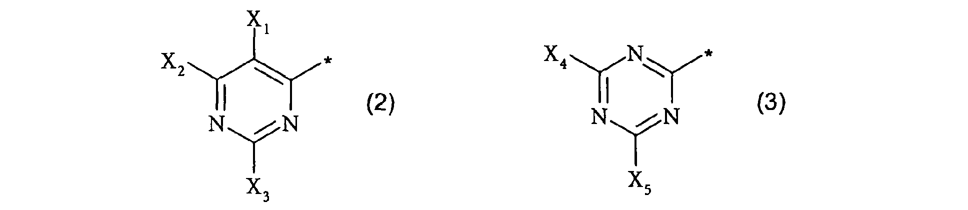 steht, worin
X₁ bis X₃ unabhängig voneinander Wasserstoff, Cyano oder Halogen bedeuten, mit der Maßgabe, dass wenigstens ein Rest X₂ bzw X₃ Halogen ist,
X₄ Chlor oder Fluor bedeutet,
X₅ für eine Gruppe der allgemeinen Formel (4) steht 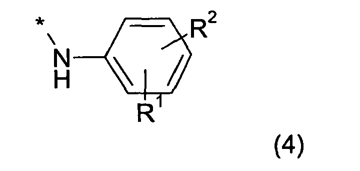 worin
R¹ Wasserstoff, Alkyl, Alkoxy, Sulfo oder Chlor bedeuten und
R² einen Rest -SO₂CH = CH₂ oder -SO₂CH₂CH₂Z bedeutet, worin Z für eine Gruppierung steht, die durch Einwirkung von Alkali eliminiert werden kann;
- n: für 0, 1 oder 2 steht,
- B: für -CH₂-SO₃M oder für Wasserstoff steht und
- M: für Wasserstoff, Ammonium, ein Alkalimetall oder das Äquivalent eines Erdalkalimetalls steht.
In der allgemeinen Formel (1) kann ein für M stehendes Alkalimetall insbesondere Lithium, Natrium und Kalium sein, während als Erdalkalimetall insbesondere Calcium in Frage kommt. Bevorzugt steht M für Wasserstoff oder Natrium.
Für X₁ bis X₃ stehendes Halogen bedeutet insbesondere Fluor oder Chlor. X₄ steht bevorzugt für Fluor oder X₅.
Für R¹ stehendes Alkyl ist bevorzugt (C₁-C₈)-Alkyl und besonders bevorzugt (C₁-C₄)-Alkyl. Beispiele für derartige Alkylgruppen sind Methyl, Ethyl, n-Propyl, i-Propyl, n-Butyl, i-Butyl, sek.-Butyl und tert.-Butyl.
Für R' stehendes Alkoxy ist insbesondere Methoxy oder Ethoxy.
Für Z stehende Reste, die durch Einwirkung von Alkali, d.h. also unter Färbebedingungen, eliminiert werden können, sind beispielsweise Chlor, Brom, Sulfato, Thiosulfato, Phosphato, (C₂-C₅)-Alkanoyloxy wie z.B. Acetyloxy, Benzoyloxy, Sulfobenzoyloxy oder p-Toluylsulfonyloxy, wobei Sulfato bevorzugt ist.
Die Gruppen "Sulfato", "Thiosulfato" und "Phosphato" schließen sowohl deren Säureform als auch deren Salzform ein. Demgemäss entsprechen Thiosulfatogruppen der allgemeinen Formel -S-SO₃M, Phosphatogruppen der allgemeinen Formel -OPO₃M₂ und Sulfatogruppen der allgemeinen Formel -OSO₃M, in welchen M die obengenannte Bedeutung besitzt. n steht besonders bevorzugt für 1.

Bevorzugte erfindungsgemäße Reaktivfarbstoffe sind solche der allgemeinen Formel (1a) 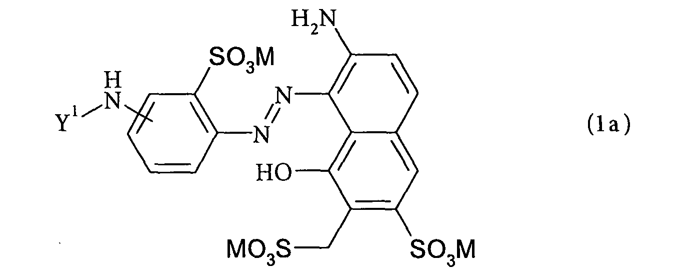 worin M wie oben angegeben definiert ist und Y¹ für einen der Reste (2a) bis (2i) 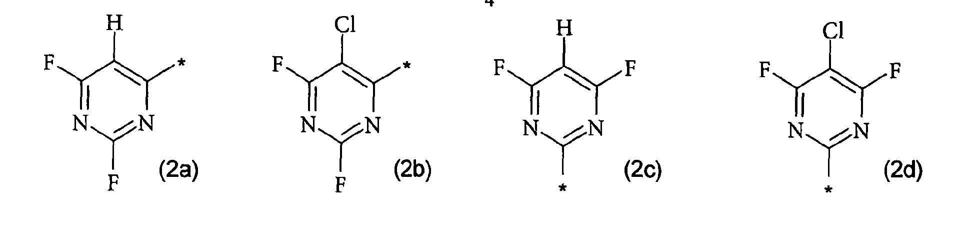 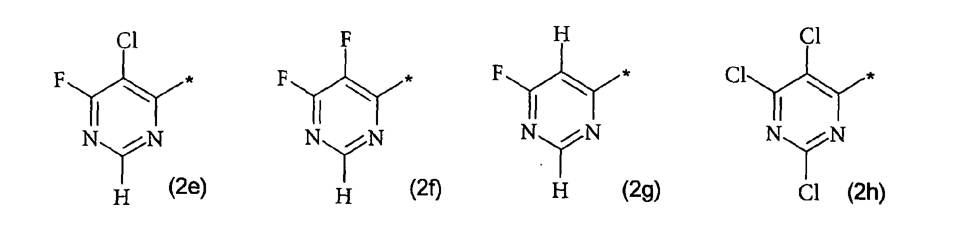 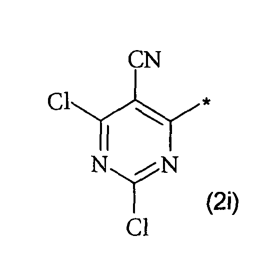 oder (3a) bis (3h) steht 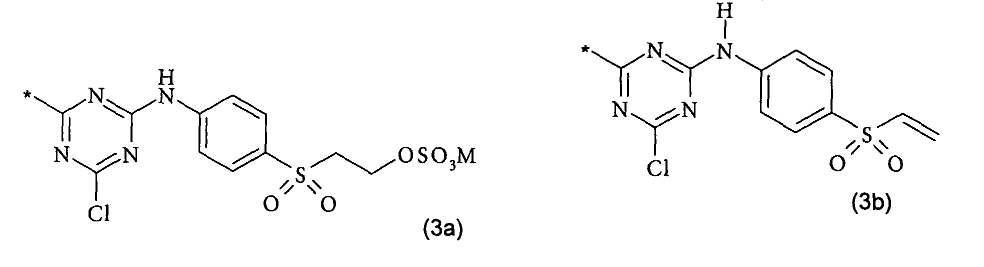 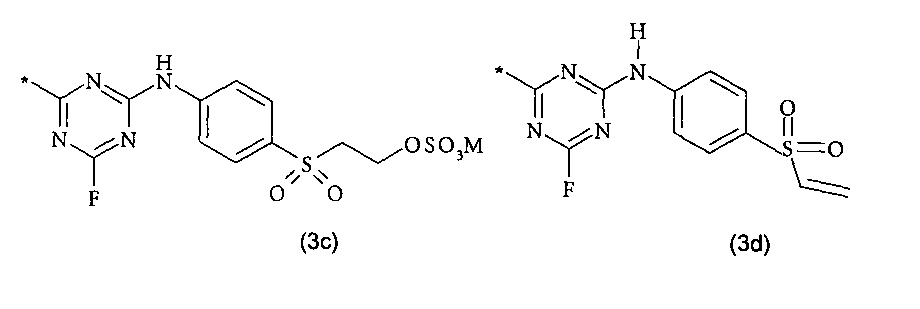 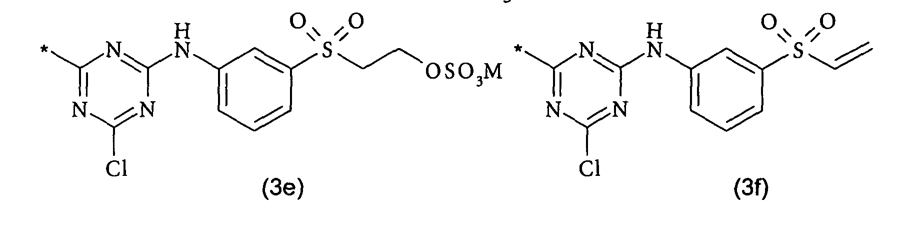 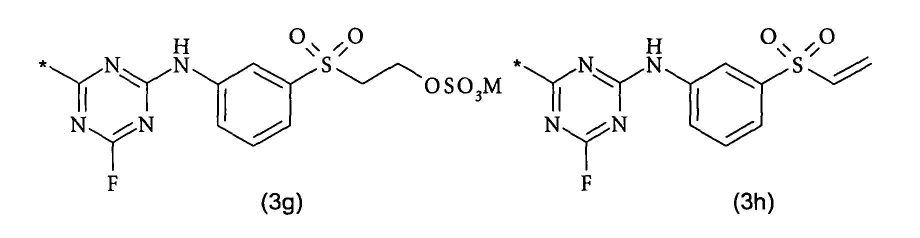 wobei M wie oben angegeben definiert ist

Besonders bevorzugt sind die erfindungsgemäßen Farbstoffe der Formeln (1 b) bis (1 d) 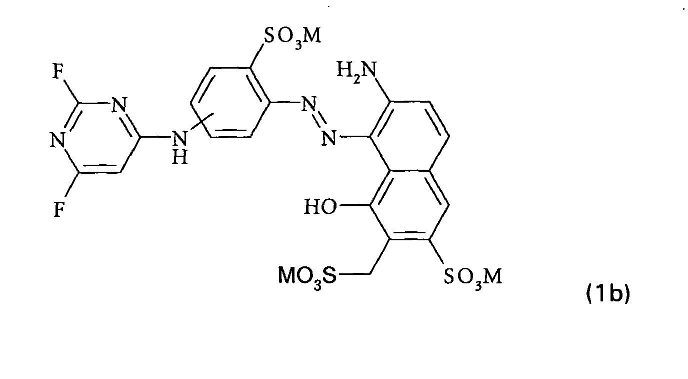 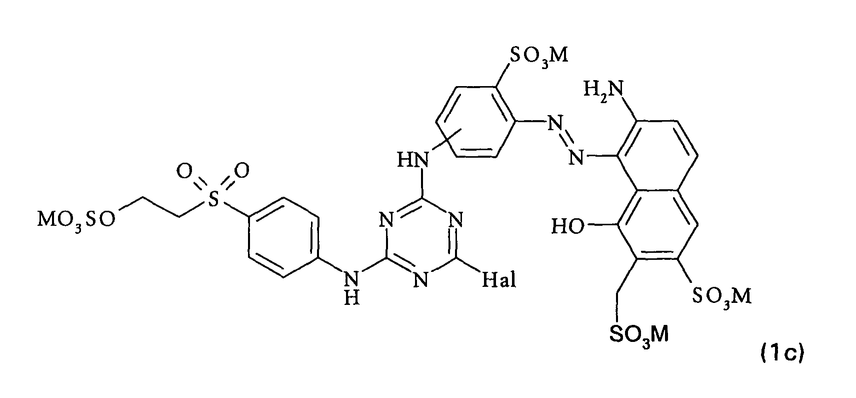 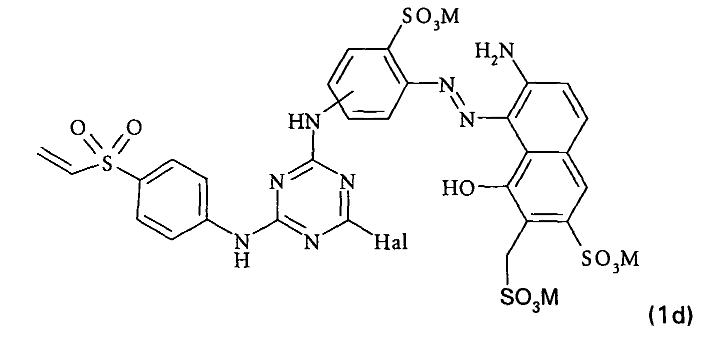 worin M wie oben angegeben definiert ist.

Erfindungsgemäße Reaktivfarbstoffe der allgemeinen Formel (1), in denen Y für eine Reaktivgruppe der allgemeinen Formel (2) steht, können in Mischungen untereinander vorliegen, in denen sich die Einzelfarbstoffe insbesondere nur in der Reaktivgruppe der allgemeinen Formel (2) unterscheiden. Bevorzugte Mischungen dieser Art enthalten z.B. einen Reaktivfarbstoff der allgemeinen Formel (1) mit Y = (2a) und einen Reaktivfarbstoff der allgemeinen Formel (1) mit Y = (2c) oder einen Reaktivfarbstoff der allgemeinen Formel (1) mit Y = (2b) und einen Reaktivfarbstoff der allgemeinen Formel (1) mit Y = (2d).

Die erfindungsgemäßen Reaktivfarbstoffe der allgemeinen Formel (1) liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wässriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Bevorzugt liegen die erfindungsgemäßen Reaktivfarbstoffe der allgemeinen Formel (1) als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 m auf. Diese festen Präparationen können zudem die erwähnten Puffersubstanzen in einer Gesamtmenge von bis zu 10 Gew.-%, bezogen auf die Präparation enthalten. Sofern die Farbstoffe in wässriger Lösung vorliegen, so beträgt der Gesamtfarbstoffgehalt in diesen wässrigen Lösungen bis zu etwa 50 Gew.-%, wie beispielsweise zwischen 5 und 50 Gew.-%., wobei der Elektrolytsalzgehalt in diesen wässrigen Lösungen bevorzugt unterhalb 10 Gew.-%, bezogen auf die wässrige Lösung, beträgt. Die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Erfindungsgemäße Reaktivfarbstoffe der allgemeinen Formel (1), in denen Y für eine Gruppe der allgemeinen Formel 3 steht, können bei gleichem Chromophor hinsichtlich der faserreaktiven Gruppe R² unterschiedliche Struktur besitzen. Insbesondere kann bei gleichem Chromophor R² zum einen -SO₂CH = CH₂ und zum anderen -SO₂CH₂CH₂Z, besonders bevorzugt β-Sulfatoethylsulfonyl, bedeuten. Dabei kann der Anteil des Farbstoffes in Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu β-ethylsubstituiertem Farbstoff im Molverhältnis zwischen 5:95 und 90:10 liegt.

Gegenstand der vorliegenden Erfindung sind ferner Verfahren zur Herstellung der Reaktivfarbstoffe der allgemeinen Formel (1).
Diese können dadurch erhalten werden, dass sie durch Umsetzung der Verbindungen der Formeln (6), (7) und (2') bzw.(6), (7), (4') und Trifluortriazin oder Trichlortriazin 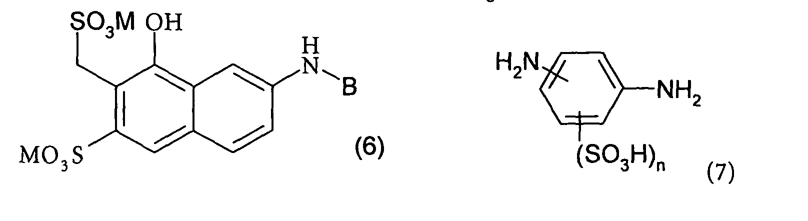 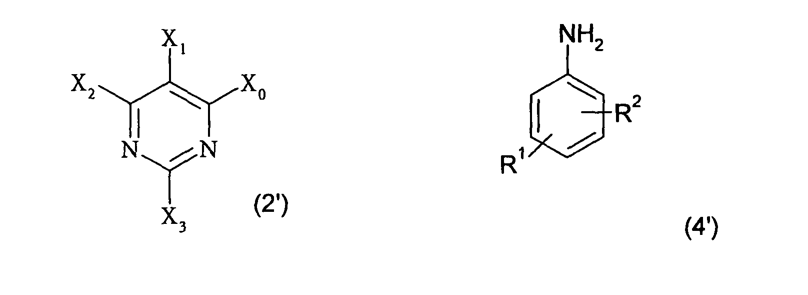 worin M, n, R¹, R², B, X₁, X₂, X₃ wie oben angegeben definiert sind und X₀ für Fluor oder Chlor steht, in an sich bekannten Diazotierungs-, Kupplungs- und Kondensationsreaktionen in an sich beliebiger Reihenfolge aufgebaut werden.

So kann beispielsweise eine Verbindung der allgemeinen Formel (8) 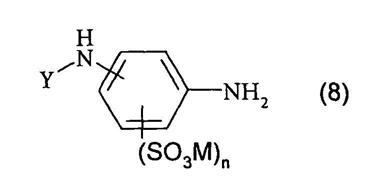 worin Y, M und n wie oben angegeben definiert sind, diazotiert und mit einer Verbindung der Formel (6) umgesetzt werden.

### Alternativ kann auch eine Verbindung der allgemeinen Formel (9)

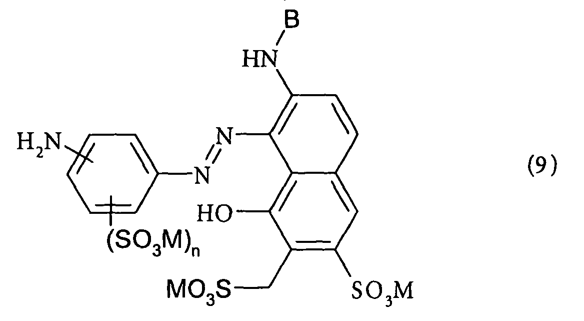

in der M und n wie oben angegeben definiert sind, mit einem Halogenpyrimidin der allgemeinen Formel (2') oder mit einem Triazin der allgemeinen Formel (3') 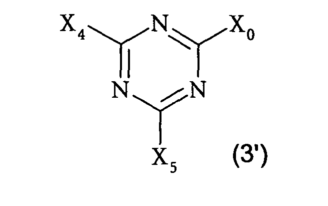 worin X₄ und X₅ wie oben angegeben definiert sind und X₀ Fluor oder Chlor bedeutet, kondensiert werden.
Die Verbindung der allgemeinen Formel (3') wiederum kann aus Trifluortriazin oder Trichlortriazin und einer Verbindung der allgemeinen Formel (4') erhalten werden.

Erfindungsgemäße Reaktivfarbstoffe der allgemeinen Formel (1), in denen Y für eine Gruppe der allgemeinen Formel (3) steht, in der X₄ Fluor oder Chlor bedeutet, können auch hergestellt werden durch Umsetzung einer Verbindung der allgemeinen Formel (9) mit Trifluortriazin bzw. Trichlortriazin und anschließender Kondensation mit einem Amin der allgemeinen Formel (4').

Die Verbindungen der allgemeinen Formel (8) sind auf verschiedenen Wegen zugänglich. Steht Y für einen Rest der allgemeinen Formel (2), so erhält man sie durch Reaktion von Halogenpyrimidinen der allgemeinen Formel (2') mit aromatischen Diaminobenzolsulfonsäuren, vorzugsweise 1,3-Diaminobenzol-4-sulfonsäure oder 1,4-Diamino-benzol-2-sulfonsäure.

Entspricht Y einem Rest der allgemeinen Formel (3), so erhält man die Verbindungen der allgemeinen Formel (8) durch Umsetzung der Verbindungen der allgemeinen Formel (3') mit aromatischen Diaminobenzolsulfonsäuren, vorzugsweise 1,3-Diaminobenzol-4-sulfonsäure oder 1,4-Diamino-benzol-2-sulfonsäure.

Die oben genannten Diazotierungs-, Kupplungs- und Kondensationsreaktionen sind dem Fachmann an sich bekannt und können in allgemein üblicher, in der einschlägigen Literatur ausführlich beschriebenen Art und Weise ausgeführt werden.
Die erfindungsgemäßen Farbstoffe der allgemeinen Formel (1) werden bei den oben beschriebenen Herstellungsverfahren als Lösung oder Suspension erhalten und können durch Aussalzen isoliert werden. Sie können auch sprühgetrocknet werden, auch ein Eindampfen der Lösung oder Suspension ist möglich.

Die erfindungsgemäßen Reaktivfarbstoffe der allgemeinen Formel (1) besitzen wertvolle anwendungstechnische Eigenschaften. Sie werden zum Färben und Bedrucken von hydroxy- und/oder carbonamidgruppenhaltigen Materialien, beispielsweise in Form von Flächengebilden, wie Papier und Leder oder von Folien, wie beispielsweise aus Polyamid oder in der Masse, wie beispielsweise von Polyamid und Polyurethan, insbesondere aber in Form von Fasern der genannten Materialien verwendet. Bevorzugt werden sie zum Färben und Bedrucken cellulosehaltiger Fasermaterialien aller Art verwendet. Außerdem eignen sie sich auch zum Färben oder Bedrucken von hydroxygruppenhaltigen Fasern, die in Mischgeweben enthalten sind, z. B. von Gemischen aus Baumwolle mit Polyesterfasern oder Polyamidfasern. Es ist auch möglich, mit ihnen Textilien oder Papier nach dem Inkjet-Verfahren zu bedrucken.

Die vorliegende Erfindung betrifft somit auch die Verwendung der erfindungsgemäßen Reaktivfarbstoffe der allgemeinen Formel (1) zum Färben oder Bedrucken der genannten Materialien bzw. Verfahren zum Färben oder Bedrucken solcher Materialien in an und für sich üblichen Verfahrensweisen, bei welchen man einen oder mehrere erfindungsgemäße Reaktivfarbstoffe der allgemeinen Formel (I) als Farbmittel einsetzt.

Vorteilhafterweise können die bei der Synthese anfallenden Lösungen der erfindungsgemäßen Reaktivfarbstoffe der allgemeinen Formel (1), gegebenenfalls nach Zusatz einer Puffersubstanz, gegebenenfalls auch nach Konzentrieren oder Verdünnen, direkt als Flüssigpräparation der färberischen Verwendung zugeführt werden.

Bevorzugt kommen die genannten Materialien in Form von Fasermaterialien zur Anwendung, insbesondere in Form von Textilfasern, wie Geweben oder Garnen, wie in Form von Strängen oder Wickelkörpern.
Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-1 1 und Polyamid-4.

Die erfindungsgemäßen Reaktivfarbstoffe der allgemeinen Formel (1) lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, Farbausbeuten. Vorzugsweise wird beim Ausziehverfahren bei einem pH von 3 bis 7, insbesondere bei einem pH von 4 bis 6 gefärbt. Das Flottenverhältnis kann innerhalb eines weiten Bereiches gewählt werden und liegt beispielsweise zwischen 1:3 und 1:50, vorzugsweise zwischen 1:5 und 1:30. Man färbt bevorzugt in wässrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Zur Erhöhung der Nassechtheiten des gefärbten Materials kann in einer Nachbehandlung nichtfixierter Farbstoff entfernt werden. Diese Nachbehandlung erfolgt insbesondere bei einem pH-Wert von 8 bis 9 und Temperaturen von 75 bis 80°C.

Man kann dabei so vorgehen, dass man das Material in das warme Bad einbringt und dieses allmählich auf die gewünschte Temperatur erwärmt und den Färbeprozess zu Ende führt. Die das Ausziehen der Farbstoffe beschleunigenden Neutralsalze können dem Bade gewünschten Falls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103 ° C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Reaktivfarbstoffe der allgemeinen Formel (1) zeichnen sich durch hohe Reaktivität, gutes Fixiervermögen, sehr gutes Aufbauvermögen, sowie hohe Licht- und Schweißlichtechtheit aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Sie eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Auch lässt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Zum Färben von dieser Materialien können die üblichen, in der Literatur beschriebenen und dem Fachmann bekannten Färbeund Druckverfahren herangezogen werden (siehe zum Beispiel H.-K. Rouette, Handbuch der Textilveredlung, Deutscher Fachverlag GmbH, Frankfurt am Main). Die Färbeflotten und Druckpasten können außer den Farbstoffen der allgemeinen Formeln (I) und Wasser weitere Zusätze enthalten. Zusätze sind beispielsweise Netzmittel, Antischaummittel, Egalisiermittel und die Eigenschaften des Textilmaterials beeinflussende Mittel, wie Weichmachungsmittel, Zusätze zur Flammfestausrüstung und schmutz-, wasser- und ölabweisende oder wasserenthärtende Mittel. Insbesondere Druckpasten können auch natürliche oder synthetische Verdicker, wie beispielsweise Alginate und Celluloseether, enthalten. In den Färbebädern und Druckpasten können die Farbstoffmengen je nach gewünschter Farbtiefe in weiten Grenzen variieren. Im allgemeinen liegen die Farbstoffe der allgemeinen Formel (I) in Mengen von 0,01 bis 15 Gew.%, insbesondere in Mengen von 0,1 bis 10 Gew. % bezogen auf das Färbegut bzw. die Druckpaste vor.

Die erfindungsgemäßen Reaktivfarbstoffe der allgemeinen Formel (1) zeichnen sich darin aus, dass sich nach dem Färbeprozess auf dem Fasermaterial nicht fixierte Farbstoffanteile sehr leicht auswaschen lassen, ohne dass Weißwäsche, die sich mit in dem Waschprozess befindet, durch den sich ablösenden Farbstoff angeschmutzt wird. Hieraus ergeben sich Vorteile für den Färbeprozess, in dem Waschzyklen und damit Kosten eingespart werden.

Die mit den erfindungsgemäßen Reaktivfarbstoffen der allgemeinen Formel (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweißechtheiten sowie gute Plissierechtheit, Bügelechtheit und Reibechtheit.

Weiterhin betrifft die vorliegende Erfindung die Verwendung der oben genannten Farbstoffe der allgemeinen Formel (1) in Drucktinten für den digitalen Textildruck nach dem Ink-Jet Verfahren.

Die erfindungsgemäßen Drucktinten enthalten einen oder mehrere der genannten Reaktivfarbstoffe, beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-% bezogen auf das Gesamtgewicht der Tinte. Ebenfalls enthalten sein können Kombinationen der genannten Reaktivfarbstoffe mit anderen Reaktivfarbstoffen, die im Textildruck Verwendung finden. Für den Einsatz der Tinten im Continuous flow Verfahren kann durch Elektrolytzusatz eine Leitfähigkeit von 0,5 bis 25 mS/m eingestellt werden. Als Elektrolyt eignen sich beispielsweise: Lithiumnitrat, Kaliumnitrat. Die erfindungsgemäßen Farbstofftinten können organische Lösungsmittel mit einem Gesamtgehalt von 1-50%, bevorzugt von 5-30 Gew.-% enthalten. Geeignete organische Lösungsmittel sind beispielsweise
Alkohole, z. B. Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3- Butandiol, 1,4-Butandiol, 1,2-Propandiol, 2,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2- Octandiol, Polyalkylenglykole, z. B.: Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B.: Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Polyalkylenglykolether, wie z. B.: Polyethylenglokolmonomethylether, Polypropylenglykolglycerolether, Polyethylenglykoltridecylether, Polyethylenglykolnonylphenylether,
Amine, wie z. B.: Methylamin, Ethylamin, Triethylamin, Diethylamin, Dimethylamin, Trimethylamin, Dibutylamin, Diethanolamin, Triethanolamin, N-Acetylethanolamin, N-Formylethanolamin, Ethylendiamin,
Harnstoffderivate, wie z. B.: Harnstoff, Thioharnstoff, N-Methylharnstoff, N,N'epsilon Dimethylharnstoff, Ethylenharnstoff, 1,1,3,3-Tetramethylharnstoff, Amide, wie z. B.: Dimethylformamid, Dimethylacetamid, Acetamid, Ketone oder Ketoalkohole, wie z. B.: Aceton, Diacetonalkohol, cyclische Ether, wie z. B.; Tetrahydrofuran, Trimethylolethan, Trimethylolpropan, 2- Butoxyethanol, Benzylalkohol, 2-Butoxyethanol, Gamma-butyrolacton, epsilon ―Caprolactam, ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N- Methyl-2-Pyrrolidon, N-Ethyl-Pyrrolidon, 2-Pyrrolidon, 1-(2-Hydroxyethyl)-2- Pyrrolidon, 1-(3-Hydroxypropyl)-2-Pyrrolidon, 1,3-Dimethyl-2-imidazolidinon, 1,3- Dimethyl-2-imidazolinon, 1,3-Bismethoxymethylimidazolidin, 2-(2- Methoxyethoxy)ethanol, 2-(2-Ethoxyethoxy)ethanol, 2-(2-Butoxyethoxy)ethanol, 2- (2-Propoxyethoxy)ethanol, Pyridin, Piperidin, Butyrolaceton, Trimethylpropan, 1,2- Dimethoxypropan, Dioxan, Ethylacetat, Ethylendiamintetraacetat, Ethylpenthylether, 1,2-Dimethoxypropan, Trimethylpropan.
Weiterhin können die erfindungsgemäßen Drucktinten die üblichen Zusatzstoffe enthalten, wie beispielsweise Viskositätsmoderatoren um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.
Als Viskositätsmoderatoren eignen sich rheologische Additive beispielsweise: Polyvinylcaprolactam, Polyvinylpyrrolidon sowie deren Co-Polymere Polyetherpolyol, Assoziativverdicker, Polyharnstoff, Polyurethan, Natriumalginate, modifizierte Galaktomannane, Polyetherharnstoff, Polyurethan, nichtionogene Celluloseether.
Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.
Als oberflächenaktive Substanzen eignen sich beispielsweise: Tenside aller Art, bevorzugt nichtionogene Tenside, Butyldiglykol, 1,2 Hexandiol.
Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.
Die Tinten können in üblicher Weise durch Mischen der Komponenten in Wasser hergestellt werden.
Die erfindungsgemäßen Farbstofftinten eignen sich für den Einsatz in Tintenstrahldruckverfahren zum Bedrucken der verschiedensten vorpräparierten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und
Hanf, sowie Zellstoff und regenerierte Cellulose. Die erfindungsgemäßen Drucktinten sind auch zum Bedrucken von vorbehandelten hydroxygruppenhaltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.
Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.
Die Vorbehandlung des textilen Substrates, wie zum Beispiel Cellulose- und Celluloseregeneratfasern sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomannane. Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink- Jet Technologien in definierter Menge gleichmäßig auf das textile Substrat aufgebracht und anschließend getrocknet.
Nach dem Bedrucken wird das textile Fasermaterial bei 120 bis 150 °C getrocknet und anschließend fixiert.
Die Fixierung der mit Reaktivfarbstoffen hergestellten Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten. Man unterscheidet ein- und zweiphasige Fixierungsprozesse:
Bei der einphasigen Fixierung befinden sich die zur Fixierung notwendigen Chemikalien bereits auf dem textilen Substrat.
Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden.
Im Anschluss an die Fixierung wird die Drucknachbehandlung durchgeführt, die die Voraussetzung für gute Echtheiten, hohe Brillanz und einen einwandfreien Weißfond ist.
Die mit den erfindungsgemäßen Farbstofftinten hergestellten Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben. Im allgemeinen werden sie aber in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wässriger Lösung ermittelt.

### Beispiel 1

18.8 Teile 1,3-Diaminobenzol-4-sulfonsäure werden in 150 Teilen Wasser suspendiert und durch Zugabe von Lithiumhydroxid-Lösung neutral gelöst. Man kühlt auf 10°C ab und tropft in einer Stunde 17.4 Teile 2,4,6-Trifluor-pyrimidin zu, wobei mit 15% iger Sodalösung ein pH-Wert von 5.5 gehalten wird. Nach beendeter Zugabe lässt man auf 20° bis 25°C aufwärmen und rührt noch eine Stunde nach. Anschließend wird filtriert und mit 6.9 Teilen Natriumnitrit versetzt.
Das Filtrat kühlt man durch Einwerfen von Eis auf 10°C ab und tropft es in 30 Minuten auf eine Vorlage von 100 Teilen Eis und 60 Teilen konz. Salzsäure (31 %). Man rührt 1 Stunde nach und zerstört den Nitrit-Überschuss durch Zugabe von Amidoschwefelsäure.
Eine neutrale Lösung von 33,3 Teilen 6-Amino-4-hydroxy-3-hydroxysulfomethylnaphthalin-2 sulfonsäure wird in 300 Teilen Wasser wird in 30 Minuten in die 10°C kalte Diazotierung getropft.
Mit Sodalösung wird auf pH 6 gestellt und 1 Stunde nachgerührt. Die Temperatur steigt auf 20°C an. Anschließend wird mit NaH₂PO₄/Na₂HPO₄ gepuffert. Die erhaltene Lösung wird eingedampft.
Man erhält einen Farbstoff der Formel 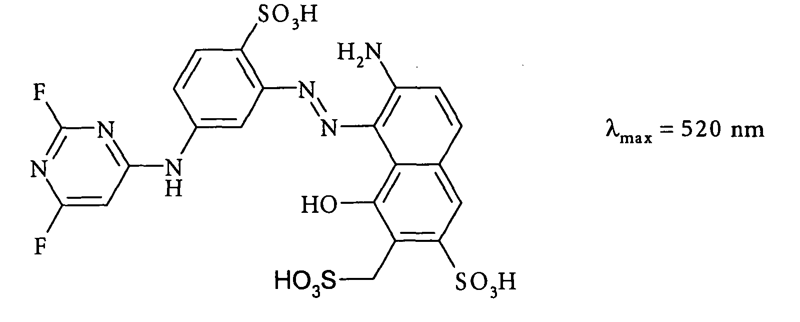 Der Farbstoff färbt und bedruckt Baumwolle in neutralen, roten Tönen mit guten Echtheiten, insbesondere hoher Lichtechtheit.

In analoger Weise wurden die Farbstoffe der nachstehenden Beispiele 2 bis 26 erhalten. Dazu wurde die Pyrimidinverbindung mit der Kondensationskomponente umgesetzt, diazotiert und auf die Verbindung der Formel (6a) gekuppelt.

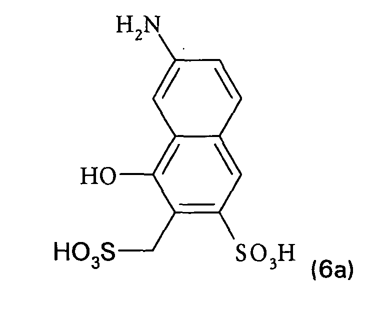

| Bsp. | Pyrimidin | Kondensationskomponente | Farbton | λₘₐₓ |
|---|---|---|---|---|
| 2 | 5-Chlor-2,4,6-trifluorpyrimidin | 1,3-Diaminobenzol-4-sulfonsäure | rot | 521 |
| 3 | 4,5,6-Trifluorpyrimidin | 1,3-Diaminobenzol-4-sulfonsäure | rot | 520 |
| 4 | 5-Chlor-4,6-difluorpyrimidin | 1,3-Diaminobenzol-4-sulfonsäure | rot | 520 |
| 5 | 4,6-Difluorpyrimidin | 1,3-Diaminobenzol-4-sulfonsäure | rot | 521 |
| 6 | 2,4,5,6-Tetrachlor-pyrimidin | 1,3-Diaminobenzol-4-sulfonsäure | rot | 520 |
| 7 | 5-Cyan-2,4,6-trichlorpyrimidin | 1,3-Diaminobenzol-4-sulfonsäure | rot | 520 |
| 8 | 5-Chlor-2,4,6-trifluorpyrimidin | 1,4-Diaminobenzol-2-sulfonsäure | rot | 526 |
| 9 | 4,5,6-Trifluorpyrimidin | 1,4-Diaminobenzol-2-sulfonsäure | rot | 525 |
| 10 | 5-Chlor-4,6-difluorpyrimidin | 1,4-Diaminobenzol-2-sulfonsäure | rot | 526 |
| 11 | 4,6-Difluorpyrimidin | 1,4-Diaminobenzol-2-sulfonsäure | rot | 526 |
| 12 | 2,4,5,6-Tetrachlorpyrimidin | 1,4-Diaminobenzol-2-sulfonsäure | rot | 525 |
| 13 | 5-Cyan-2,4,6-trichlorpyrimidin | 1,4-Diaminobenzol-2-sulfonsäure | rot | 527 |
| 14 | 2,4,6-Trifluorpyrimidin | 1,4-Diaminobenzol-2-sulfonsäure | rot | 527 |
| 15 | 5-Chlor-2,4,6-trifluorpyrimidin | 1,3-Diaminobenzol-4,6-disulfonsäure | rot | 521 |
| 16 | 4,5,6-Trifluorpyrimidin | 1,3-Diaminobenzol-4,6-disulfonsäure | rot | 521 |
| 17 | 5-Chlor-4,6-difluorpyrimidin | 1,3-Diaminobenzol-4,6-disulfonsäure | rot | 520 |
| 18 | 2,4,6-Trifluorpyrimidin | 1,3-Diaminobenzol-4,6-disulfonsäure | rot | 521 |
| 19 | 2,4,5,6-Tetrachlorpyrimidin | 1,3-Diaminobenzol-4,6-disulfonsäure | rot | 521 |
| 20 | 5-Cyan-2,4,6-trichlorpyrimidin | 1,3-Diaminobenzol-4,6-disulfonsäure | rot | 521 |
| 21 | 5-Chlor-2,4,6-trifluorpyrimidin | 1,4-Diaminobenzol-2,5-disulfonsäure | rot | 525 |
| 22 | 4,5,6-Trifluorpyrimidin | 1,4-Diaminobenzol-2,5-disulfonsäure | rot | 525 |
| 23 | 5-Chlor-4,6-difluorpyrimidin | 1,4-Diaminobenzol-2,5-disulfonsäure | rot | 526 |
| 24 | 2,4,6-Trifluorpyrimidin | 1,4-Diaminobenzol-2,5-disulfonsäure | rot | 526 |
| 25 | 2,4,5,6-Tetrachlorpyrimidin | 1,4-Diaminobenzol-2,5-disulfonsäure | rot | 526 |
| 26 | 5-Cyan-2,4,6-trichlorpyrimidin | 1,4-Diaminobenzol-2,5-disulfonsäure | rot | 525 |

### Beispiel 27

21.8 Teile 4-Nitroanilin-2-sulfonsäure werden in 400 Teilen Wasser verrührt und mit einer wässrigen NaOH-Lösung neutralisiert. Man gibt 6.9 Teile Natriumnitrit zu und rührt bis zur vollständigen Lösung.
Die erhaltene Lösung tropft man bei 0° bis 5°C auf eine Vorlage von 80 Teilen Eis und 30 Teilen Salzsäure (31 %) und rührt 60 Minuten nach. Der Nitrit-Überschuss wird durch Zugabe von Amidoschwefelsäure-Lösung beseitigt.
Eine Lösung von 33,3 Teilen 6-Amino-4-hydroxy-3-hydroxysulfonylmethylnaphthalin-2-sulfonsäure in 300 Teilen Wasser wird auf 10°C abgekühlt. Diese Lösung gibt man nun zur Suspension des Diazonium-Salzes und stellt den pH-Wert durch Zugabe von Sodalösung auf 6.0 ein.
Man erhält eine Farbstofflösung, die in Form der freien Säure eine Verbindung der Formel (10) 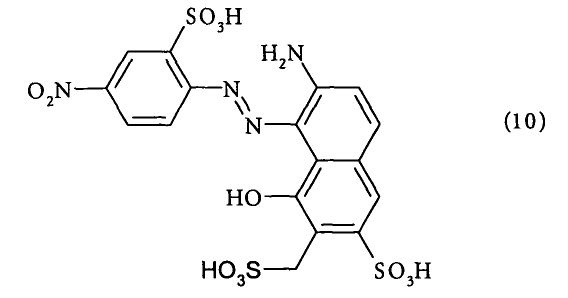 enthält. Die Lösung der Verbindung (10) wird nun auf 35 ° bis 40°C erwärmt und mit wässriger NaOH auf pH 8.5 eingestellt. Man tropft eine Lösung von 5.6 Teilen NaHS in 50 Teilen Wasser zu und hält dabei den pH-Wert bei 8.5 durch Zugabe von Salzsäure konstant.
Die erhaltene Verbindung wird durch Zusatz von 150 Teilen Natriumchlorid ausgefällt, abfiltriert und mit wässriger Natriumchloridlösung gewaschen.
Die erhaltene Verbindung entspricht in Form ihrer freien Säure der Formel (9a). 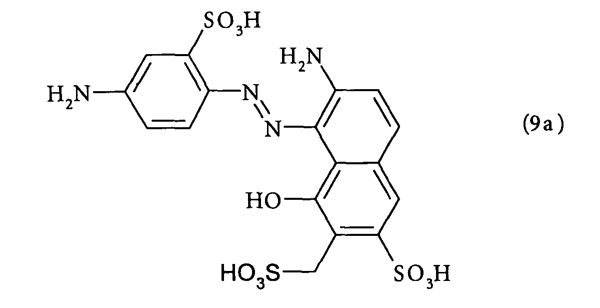 53.2 Teile der Verbindung (9a) werden in 500 Teilen Wasser gelöst. Man kühlt auf 15°C ab und tropft bei dieser Temperatur 13.4 Teile 2,4,6-Trifluorpyrimidin in einer Stunde zu. Der pH-Wert wird dabei durch Zugabe von wässriger Sodalösung bei 6.5 gehalten. Nach beendeter Zugabe rührt man noch eine Stunde bei 30° bis 35°C nach. Der Endpunkt der Reaktion wird durch Dünnschichtchromatographie ermittelt.
Durch Zugabe von Natriumchlorid wird der Farbstoff des Beispiels 14 als Isomerengemisch ausgefällt, abgesaugt und getrocknet. 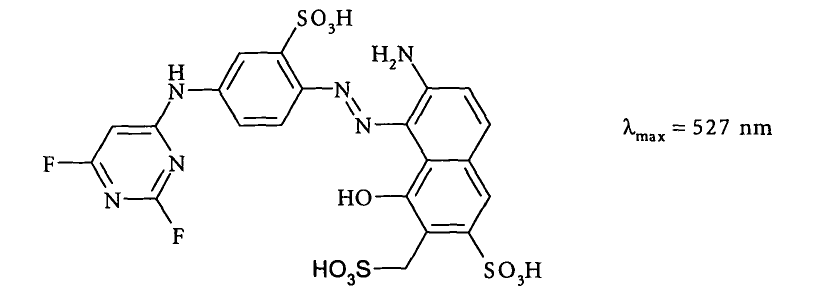 Er färbt Baumwolle mit blaustichig roter Nuance.

In analoger Weise lassen sich die Verbindungen der Formeln der Beispiele 8 bis 13 herstellen, indem man die Verbindung (9a) mit entsprechenden PyrimidinDerivaten kondensiert.

### Beispiel 28

Man löst 28.1 Teile 4-(2'-Sulfatoethylsulfonyl)-anilin in 250 Teilen Wasser durch Neutralisation mit festem Natriumhydrogencarbonat. In die Lösung gibt man 4.2 Teile Natriumfluorid und kühlt anschließend durch Zugabe von Eis auf 0° bis 5°C ab. Man tropft nun innerhalb von 5 Minuten 13.5 Teile Trifluortriazin zu, wobei der pH-Wert zunächst schnell abfällt und sich anschließend bei 4.5 bis 5.0 einpendelt. Nach beendeter Zugabe rührt man weitere 15 Minuten nach. Dann tropft man eine Lösung von 53.2 Teilen der Verbindung der Formel (9a) in 500 ml Wasser zu und stellt den pH-Wert auf 6.0 bis 6.5 ein. Zur Vervollständigung der Reaktion erwärmt man auf 30° bis 35°C und rührt 60 Minuten nach. Durch Zugabe von Natriumchlorid fällt man den Farbstoff aus, saugt ab und trocknet. Man erhält ein dunkelrotes Farbstoffpulver, dessen Struktur der Formel 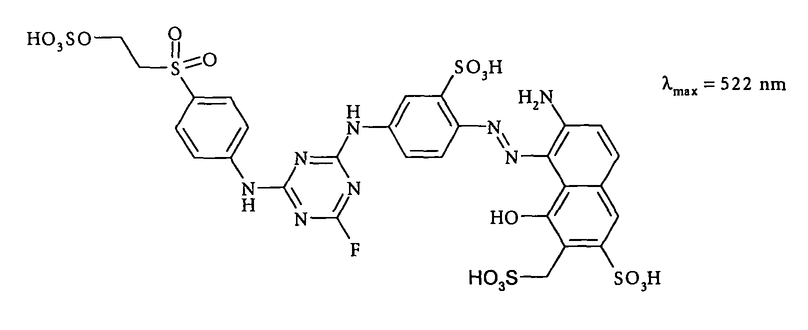 entspricht. Der Farbstoff färbt Baumwolle in blaustichig, roten Tönen mit guten Echtheiten, insbesondere hoher Lichtechtheit.

In analoger Weise erhält man die in der nachfolgenden Tabelle angegebenen Beispiele 29 bis 35, indem man zunächst das Amin der allgemeinen Formel (4') mit Trifluortriazin bzw. Trichlortriazin umsetzt und anschließend mit der Verbindung der Formel (9) kondensiert.

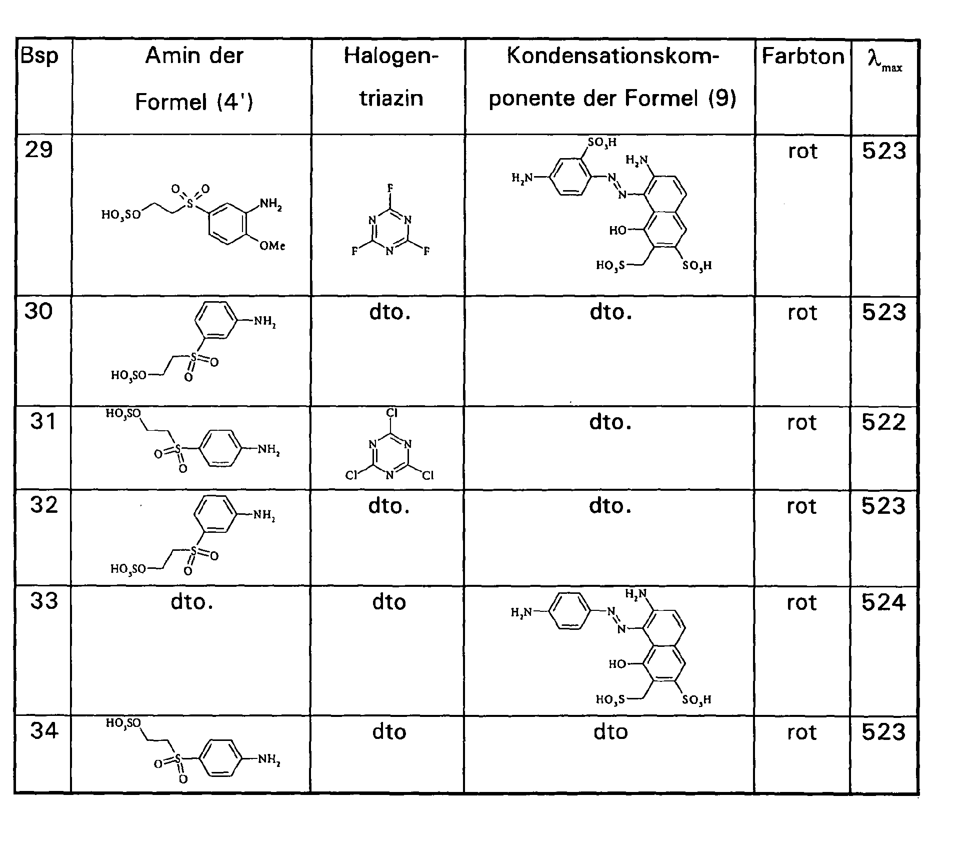

### Beispiel 35

Man löst 28.1 Teile 4-(2'-Sulfatoethylsulfonyl)-anilin in 250 Teilen Wasser durch Neutralisation mit festem Natriumhydrogencarbonat. In die Lösung gibt man 4.2 Teile Natriumfluorid und kühlt anschließend durch Zugabe von Eis auf 0° bis 5°C ab. Man tropft nun innerhalb von 5 Minuten 13.5 Teile Trifluortriazin zu, wobei der pH-Wert zunächst schnell abfällt und sich anschließend bei 4.5 bis 5.0 einpendelt. Nach beendeter Zugabe rührt man weitere 15 Minuten nach. Dann tropft man eine neutralisierte Lösung von 18.8 Teilen 1,3-Diaminobenzol-4-sulfonsäure in Wasser zu und stellt den pH-Wert auf 6.0 bis 6.5 ein. Zur Vervollständigung der Reaktion erwärmt man auf 30° bis 35°C und rührt 60 Minuten nach. Die erhaltene Lösung wird filtriert und mit 6.9 Teilen Natriumnitrit versetzt. Die erhaltene Lösung kühlt man durch Einwerfen von Eis auf 10°C ab und tropft sie in 30 Minuten auf eine Vorlage von 100 Teilen Eis und 60 Teilen konz. Salzsäure (31 %). Man rührt 1 Stunde nach und zerstört den Nitrit-Überschuss durch Zugabe von Amidoschwefelsäure.

33,3 Teile 6-Amino-4-hydroxy-3-hydroxysulfonylmethyl-naphthalin-2 sulfonsäure werden in die 10°C-kalte Diazotierung gegeben. Die Reaktionsmischung wird mit Sodalösung auf pH 6.0 gestellt. Nach beendeter Reaktion wird mit NaH₂PO₄/Na₂HPO₄ gepuffert. Die erhaltene Lösung wird eingedampft. Man erhält ein rotes Farbstoffpulver dessen Struktur der Formel 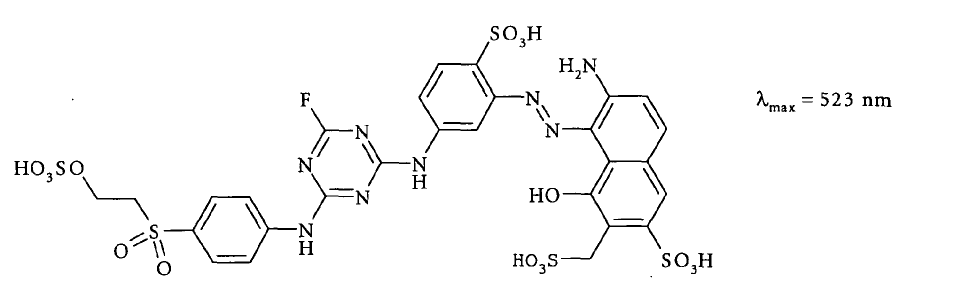 entspricht. Der Farbstoff färbt Baumwolle in stark blaustichig, roten Tönen mit guten Echtheiten, insbesondere hoher Lichtechtheit.

In analoger Weise erhält man die in der nachfolgenden Tabelle angegebenen Beispiele 36 bis 45, indem man zunächst das Amin der Formel (4') mit Trifluortriazin umsetzt und anschließend mit 1,3-Diamino-benzol-4-sulfonsäure oder 1,4-Diaminobenzol-2-sulfonsäure kondensiert. Die beschriebenen Farbstoffe erhält man nach Diazotierung und Kupplung auf die Verbindung der Formel (6).

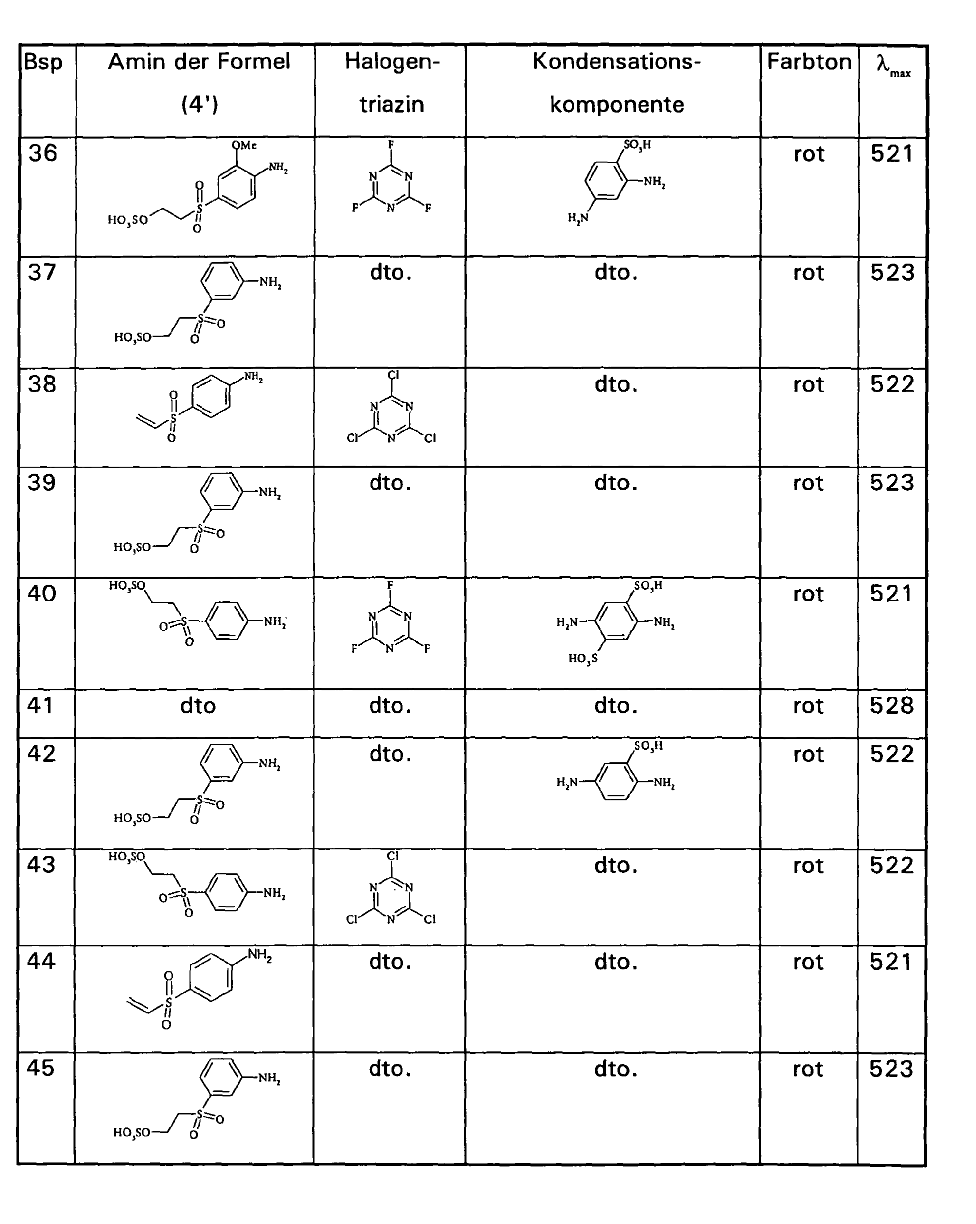

### Beispiel 46

Eine Lösung von 28,1 Teilen 4-(β-Sulfatoethylsulfonyl)-anilin in 80 Teilen Wasser mit einem pH-Wert von 4- 4,5 wird innerhalb von 30 Minuten zu einer Suspension von 18,8 Teilen Cyanurchlorid in 100 Teilen Wasser und 100 Teilen Eis gegeben. Die Acylierung wird bei einer Temperatur von 10-13°C und einem pH-Wert von 4,1-4,2 durchgeführt. Nach beendeter Reaktion wird eine Lösung von 53,2 Teilen der Verbindung der Formel (9a) in 500 Teilen Wasser zur Acylierungsmischung gegeben. Dabei wird der pH mit Sodalösung bei 5,5 gehalten. Es wird bei einem pH von 5,5 nachgerührt.
Nach beendeter Reaktion wird der pH mit Natronlauge auf 11 angehoben und gehalten. Nach beendeter Vinylisierung wird der pH mit verdünnter Schwefelsäure auf 6,0 gestellt. Die Farbstofflösung wird getrocknet. Man erhält ein dunkelrotes Pulver, dessen Struktur der Formel 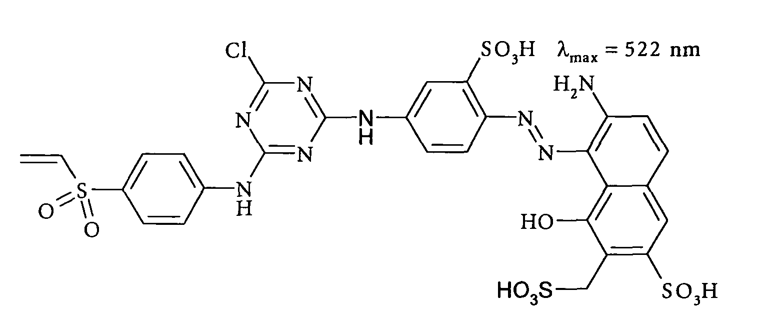 entspricht. Er färbt Polyamid mit roter Nuance und sehr guten Echtheiten, insbesondere hoher Lichtechtheit.

In analoger Weise erhält man die in der nachfolgenden Tabelle angegebenen Beispiele:

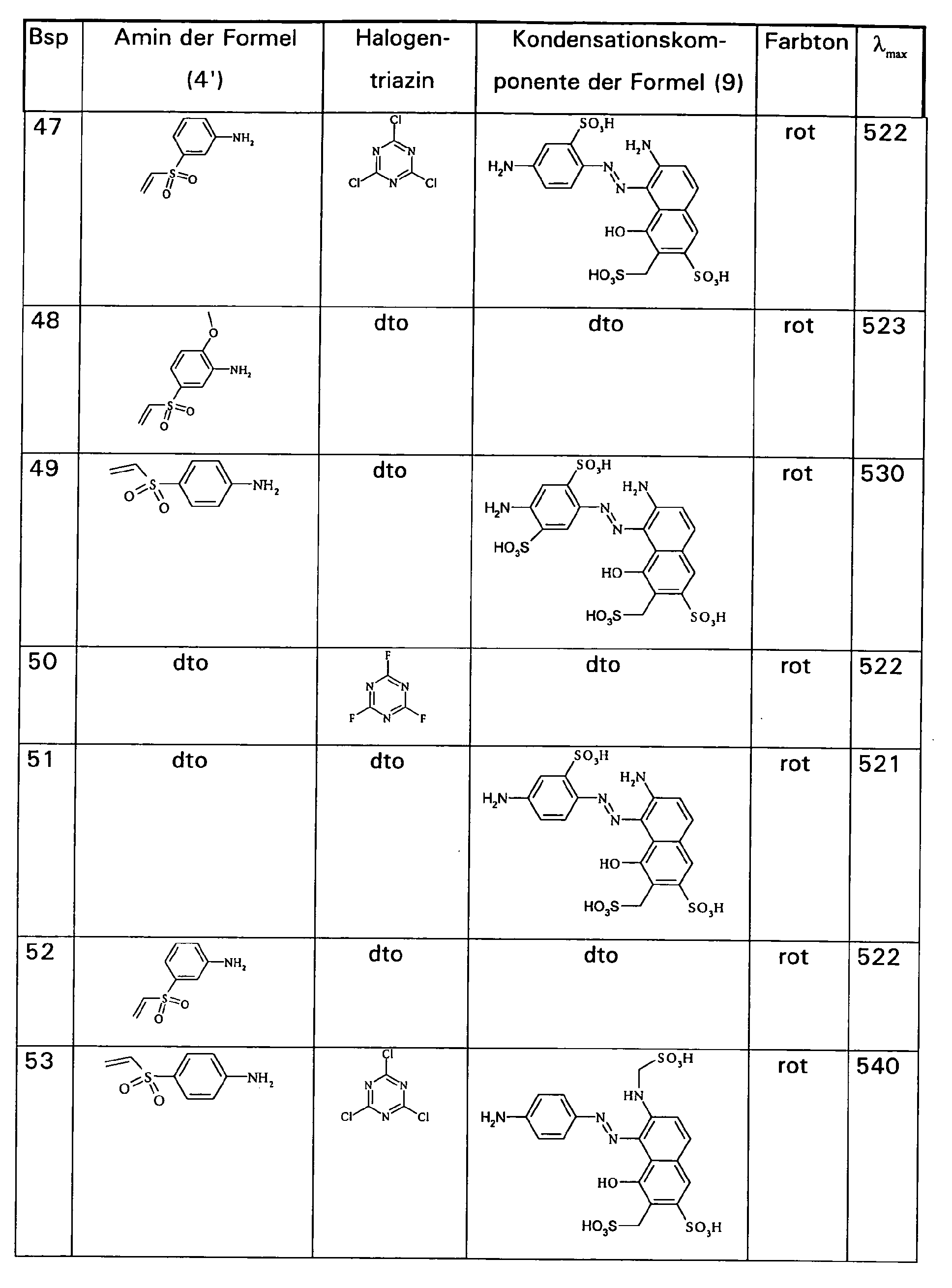

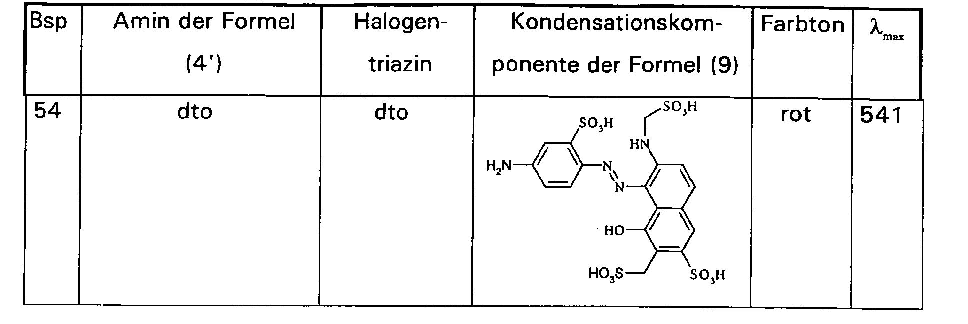

### Färbebeispiel 1

Es werden 1 Teil des Farbstoffes gemäß Herstellungsbeispiel 1 in 2000 Teilen Wasser gelöst und 5 Teile Natriumsulfat, 1 Teil eines Egalisierhilfsmittels (basierend auf einem Kondensationsprodukt aus einem höheren aliphatischen Amin und Ethylenoxid) sowie 5 Teile Natriumacetat zugegeben. Dann wird der pH mit Essigsäure (80%) auf einen Wert von 4,5 gestellt. Das Färbebad wird 10 Minuten auf 50°C erwärmt und es werden dann 100 Teile eines Wollgewebes zugegeben. Man erwärmt innerhalb von 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschließend geschleudert und getrocknet. Es wird eine rote Färbung mit guten Licht- und Nassechtheiten, sowie guter Faseregalität erhalten.

### Färbebeispiel 2

Es werden 1 Teil des Farbstoffes gemäß Herstellungsbeispiel 1 in 2000 Teilen Wasser gelöst und 1 Teil eines Egalisierhilfsmittels (basierend auf einem Kondensationsprodukt aus einem höheren aliphatischen Amin und Ethylenoxid, sowie 5 Teile Natriumacetat zugegeben. Dann wird der pH mit Essigsäure (80%) auf einen Wert von 5 gestellt. Das Färbebad wird 10 Minuten auf 50°C erwärmt und es werden dann 100 Teile eines PA-Gewebes zugegeben. Man erwärmt innerhalb von 50 Minuten auf eine Temperatur von 110°C und färbt 60 Minuten bei dieser Temperatur. Danach lässt man auf 60°C abkühlen und entnimmt das Färbegut. Das PA-Gewebe wird mit warmem und kaltem Wasser gewaschen, geseift und anschließend geschleudert und getrocknet.
Es wird eine rote Färbung mit guten Licht- und Nassechtheiten, sowie guter Faseregalität erhalten.

### Färbebeispiel 3

2 Teile eines gemäß Beispiel 1 erhaltenen Farbstoffes und 50 Teile Natriumchlorid werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25 °C gehalten, dann in 30 Minuten auf Endtemperatur (40-80°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wässrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke rote Färbung mit sehr guten Echtheitseigenschaften.

### Färbebeispiel 4

Ein textiles Flächengebilde, bestehend aus mercerisierter Baumwolle wird mit einer Flotte, enthaltend 35 g/l Natriumcarbonat kalz, 100 g/l Harnstoff und 150 g/l einer niedrigviskosen Na-Alginatlösung (6%) foulardiert und dann getrocknet. Die Flottenaufnahme beträgt 70%.
Auf das so vorbehandelte Textil wird eine wässrige Tinte, enthaltenden
2% des Farbstoffes gemäß Beispiel 1
20% Sulfolan
0,01 % Mergal K9N
77,99% Wasser
mit einem Drop-on-Demand (Bubble-Jet) Ink-Jet Druckkopf aufgedruckt. Der Druck wird vollständig getrocknet. Die Fixierung erfolgt mittels Sattdampf bei 102 ° C während 8 Minuten. Anschliessend wird der Druck warm gespült, mit heissem Wasser bei 95 ° C einer Echtheitswäsche unterzogen, warm gespült und dann getrocknet. Man erhält einen blaustichig roten Druck mit hervorragenden Gebrauchsechtheiten.

### Färbebeispiel 5

Ein textiles Flächengebilde, bestehend aus mercerisierter Baumwolle wird mit einer Flotte, enthaltend 35 g/l Natriumcarbonat kalz, 50 g/l Harnstoff und 150 g/l einer niedrigviskosen Na-Alginatlösung (6%) foulardiert und dann getrocknet. Die Flottenaufnahme beträgt 70%. Auf das so vorbehandelte Textil wird eine wässrige Tinte, enthaltend
8% Farbstoff gemäß Beispiel 1
20% 1,2-Propandiol
0,01 % Mergal K9N und
71,99 % Wasser
mit einem Drop-on-Demand (Bubble-Jet) Inkjet Druckkopf aufgedruckt. Der Druck wird vollständig getrocknet. Die Fixierung erfolgt mittels Sattdampf bei 102 ° C während 8 Minuten.
Anschliessend wird der Druck warm gespült, mit heissem Wasser bei 95 ° C einer Echtheitswäsche unterzogen, warm gespült und dann getrocknet. Man erhält einen blaustichig roten Druck mit hervorragenden Gebrauchsechtheiten.

### Färbebeispiel 6

Ein textiles Flächengebilde, bestehend aus mercerisierter Baumwolle wird mit einer Flotte, enthaltend 35 g/l Natriumcarbonat kalz, 100 g/l Harnstoff und 150 g/l einer niedrigviskosen Na-Alginatlösung (6%) foulardiert und dann getrocknet. Die Flottenaufnahme beträgt 70%. Auf das so vorbehandelte Textil wird eine wässrige Tinte, enthaltend
8 % Farbstoff gemäß Beispiel 1
15 % N-Methyl-pyrrolidon
0,01 Mergal K9N und
77,99 % Wasser
mit einem Drop-on-Demand (Bubble-Jet) Inkjet Druckkopf aufgedruckt. Der Druck wird vollständig getrocknet. Die Fixierung erfolgt mittels Sattdampf bei 102 ° C während 8 Minuten. Anschliessend wird der Druck warm gespült, mit heissem Wasser bei 95 ° C einer Echtheitswäsche unterzogen, warm gespült und dann getrocknet. Man erhält einen blaustichig roten Druck mit hervorragenden Gebrauchsechtheiten.

## Patentansprüche

1. Reaktivfarbstoffe der allgemeinen Formel (1) 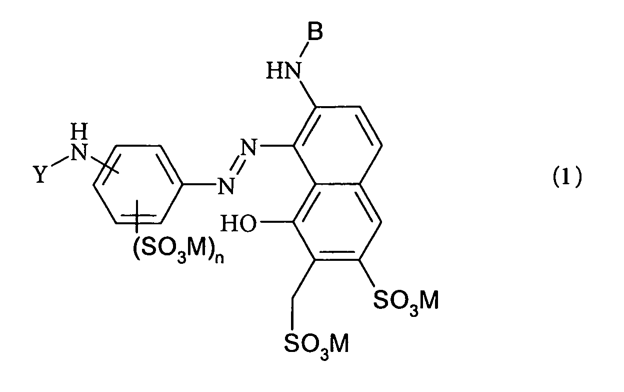 worin
Y für eine heterocyclische Reaktivgruppe der allgemeinen Formel (2) oder (3) 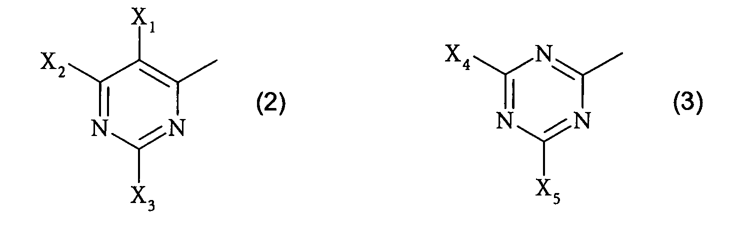 steht, worin
X₁ bis X₃ unabhängig voneinander Wasserstoff, Cyano oder Halogen bedeuten, mit der Maßgabe, dass wenigstens ein Rest X₂ bzw X₃ Halogen ist,
X₄ Chlor oder Fluor bedeutet,
X₅ für eine Gruppe der allgemeinen Formel (4) steht 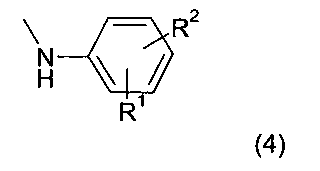 worin
R' Wasserstoff, Alkyl, Alkoxy, Sulfo oder Chlor bedeuten und R² einen Rest -SO₂CH = CH₂ oder -SO₂CH₂CH₂Z bedeutet, worin Z für eine Gruppierung steht, die durch Einwirkung von Alkali eliminiert werden kann;
n für 0,1 oder 2 steht,
B für -CH₂-SO₃M oder für Wasserstoff steht und
M für Wasserstoff, Ammonium, ein Alkalimetall oder das Äquivalent eines Erdalkalimetalls steht.

2. Reaktivfarbstoff gemäß Anspruch 1, **dadurch gekennzeichnet, dass** n für 0 steht.

3. Reaktivfarbstoff gemäß Anspruch 1 und/oder 2, **dadurch gekennzeichnet,dass** Y für eine heterocyclische Reaktivgruppe der allgemeinen Formel (3), R₁ für Wasserstoff, (C₁-C₄)-Alkyl oder Phenyl und B für Wasserstoff stehen.

4. Reaktivfarbstoff gemäß einem oder mehreren der Ansprüche 1 bis 3, **dadurch gekennzeichnet, dass** er die allgemeinen Formel (1a) 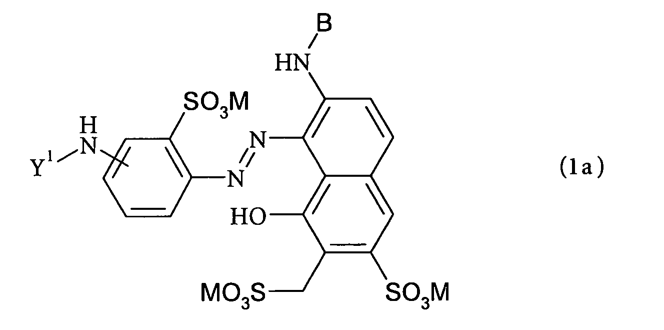 aufweist, worin
M wie in Anspruch 1 angegeben definiert ist und
Y¹ für einen der Reste (2a) bis (2i) 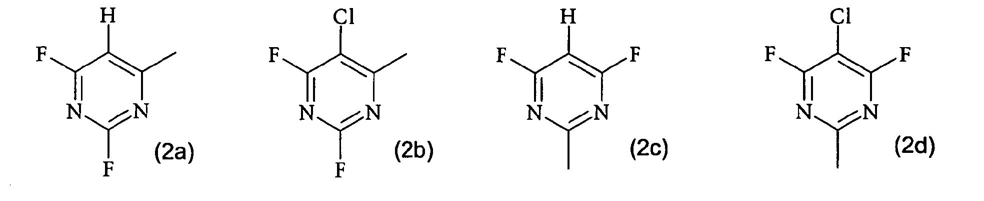 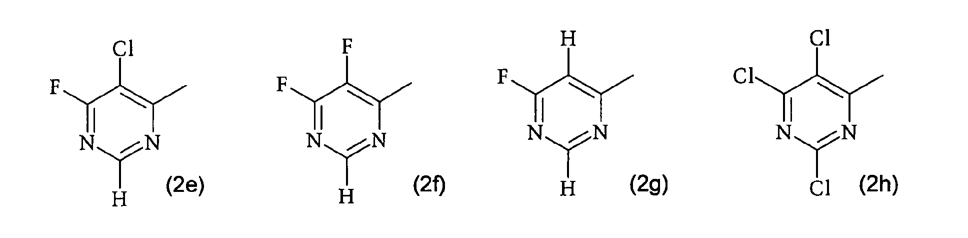 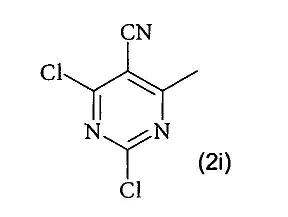 wobei B wie in Anspruch 1 angegeben, definiert ist.

5. Reaktivfarbstoff gemäß einem oder mehreren der Ansprüche 1 bis 4, **dadurch gekennzeichnet, dass** er die allgemeine Formel (1 b) aufweist 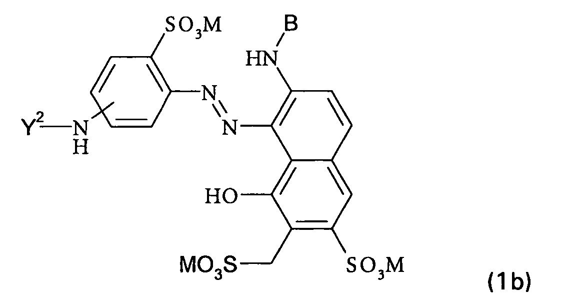 worin M wie in Anspruch 1 angegeben definiert ist und
Y² für einen der Reste (3a) bis (3h) steht: 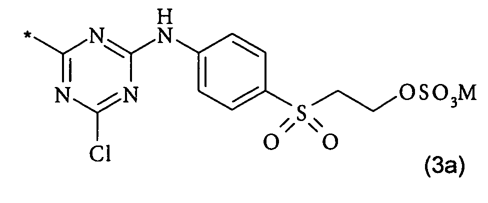 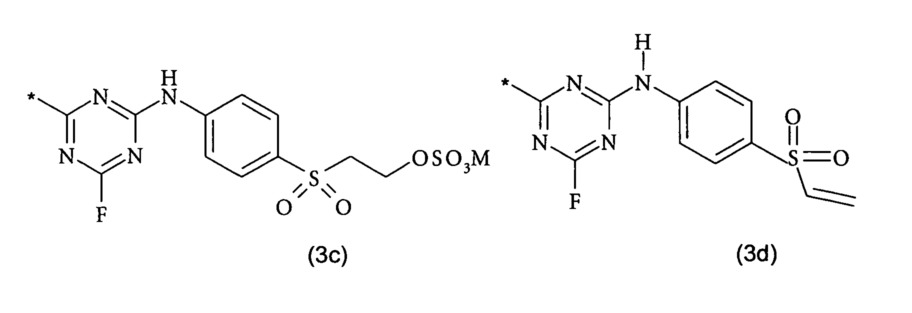 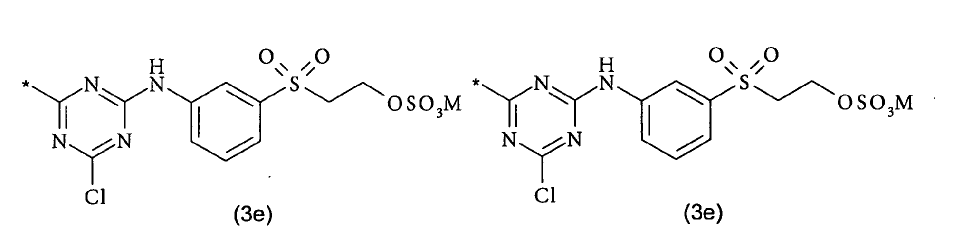 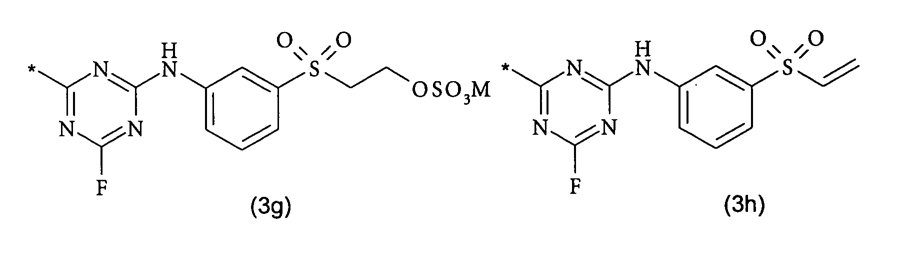 und B und M wie in Anspruch 1 angegeben, definiert sind.

6. Reaktivfarbstoff gemäß einem oder mehreren der Ansprüche 1 bis 5, **dadurch gekennzeichnet, dass** B Wasserstoff bedeutet.

7. Verfahren zur Herstellung eines Reaktivfarbstoffes gemäß einem oder mehreren der Ansprüche 1 bis 6, **dadurch gekennzeichnet, dass** er durch Umsetzung der Verbindungen der Formeln (6), (7) und (2') bzw. (6), (7), (4') und Trifluortriazin, bzw. Trichlortriazin 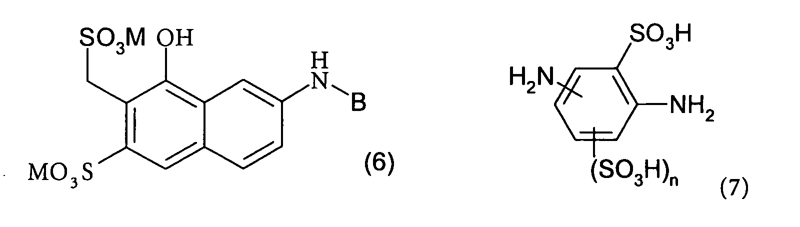 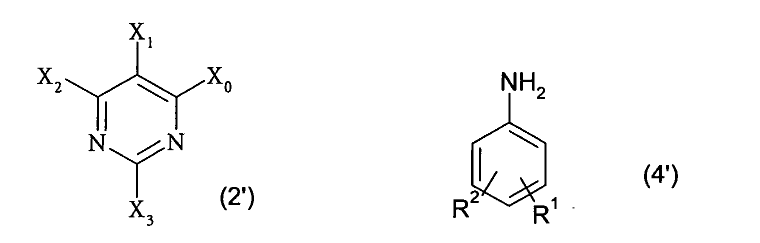 worin M, n, R¹, R², B, X₁, X₂, X₃ wie oben angegeben definiert sind und Xₒ für Fluor oder Chlor steht, in an sich bekannten Diazotierungs-, Kupplungs- und Kondensationsreaktionen in an sich beliebiger Reihenfolge aufgebaut wird.

8. Verfahren gemäß Anspruch 7, **dadurch gekennzeichnet, dass** eine Verbindung der allgemeinen Formel (8) 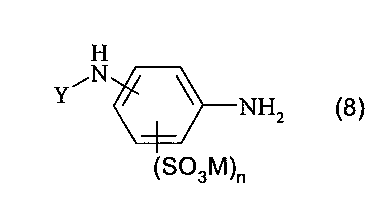 worin Y, M und n wie in Anspruch 1 angegeben definiert sind, diazotiert und mit einer Verbindung der Formel (6) umgesetzt wird.

9. Verfahren gemäß Anspruch 7, **dadurch gekennzeichnet, dass** eine Verbindung der allgemeinen Formel (9) 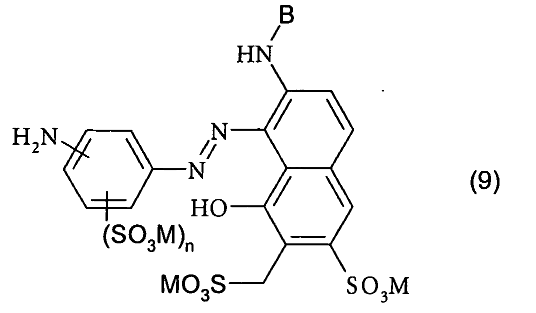 in der M, B und n wie in Anspruch 1 angegeben definiert sind, mit einem Halogenpyrimidin der allgemeinen Formel (2') oder mit einem Triazin der allgemeinen Formel (3') 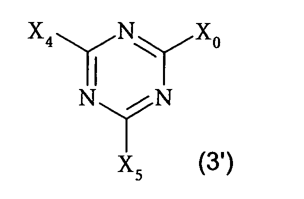 worin X₄ und X₅ wie in Anspruch 1 angegeben definiert sind und X₀ Fluor oder Chlor bedeutet, kondensiert werden.

10. Farbstoffpräparationen enthaltend einen oder mehrere Reaktivfarbstoffe gemäß einem oder mehreren der Ansprüche 1 bis 6 zum Färben und Bedrucken von hydroxy- und/oder carbonamidgruppenhaltigem Material, insbesondere Fasermaterial.

11. Wässrige Drucktinten für den Textildruck nach dem Ink-Jet-Verfahren, **dadurch gekennzeichnet, dass** sie einen oder mehrere Reaktivfarbstoffe aus den Ansprüchen 1 - 6 in Mengen von 0,01 Gew.% bis 40 Gew.% bezogen auf das Gesamtgewicht der Tinten enthalten.

12. Verfahren zum Färben, zum konventionellen Bedrucken sowie zum Bedrucken nach dem Ink-Jet-Verfahren von textilen Fasermaterialien, **dadurch gekennzeichnet, dass** man einen oder mehrere Reaktivfarbstoffe aus den Ansprüchen 1 bis 6 verwendet.
